Europäisches Patentamt

European Patent Office

Office européen des brevets

(11) Publication number: **0 056 504**
**B1**

## (12) EUROPEAN PATENT SPECIFICATION

(45) Date of publication of patent specification: **26.06.85**

(21) Application number: **81201393.6**

(22) Date of filing: **22.12.81**

(51) Int. Cl.⁴: **F 25 D 31/00, A 23 L 3/36**

(54) Vacuum cooling tunnel.

(30) Priority: **15.01.81 NL 8100173**

(43) Date of publication of application:
**28.07.82 Bulletin 82/30**

(45) Publication of the grant of the patent:
**26.06.85 Bulletin 85/26**

(84) Designated Contracting States:
**AT BE CH DE FR GB IT LI LU NL SE**

(56) References cited:
**DE-A-2 522 840**
**US-A-1 594 169**
**US-A-2 748 576**
**US-A-2 767 556**
**US-A-2 996 898**
**US-A-3 543 369**

**KOELTECHNIEK, vol. 62, no. 10, October 1969,
Den Haag, NL, IR.A. CLUISTRA: "De
waterdampcondensor van een vacuümkoeler",
pages 211-215**

(73) Proprietor: **GRASSO'S KONINKLIJKE
MACHINEFABRIEKEN N.V.
Parallelweg 27
NL-5223 AL 's-Hertogenbosch (NL)**

(72) Inventor: **Verhoef, Hermanus Johan Nicolaas
C. Pulskensstraat 9
NL-5224 JD 's-Hertogenbosch (NL)**

(74) Representative: **van der Beek, George Frans
et al
Nederlandsch Octrooibureau Johan de Wittlaan
15 P.O. Box 29720
NL-2502 LS 's-Gravenhage (NL)**

Courier Press, Leamington Spa, England.

## Description

The invention relates to a vacuum cooling tunnel, in particular for cooling water containing products, such as for example salad, comprising a horizontal cylindrical housing having an access door at at least one end for supplying or removing loads of products on pallets or the like, whereby in opposite horizontally spaced segments of the cylindrical housing condenser bodies are arranged each consisting of parallel pipes extending in the longitudinal direction of the housing through which a coolant may be passed, which pipes are arranged in a rectangular pattern within an enclosure with at least one vertical wall, the upper side of which enclosure communicates with the space in the tunnel between the opposite vertical walls and to which at least one vacuum pump is connected for sucking off the medium present in said space after said medium has passed the condensor body in a direction perpendicular to its pipes.

Such cooling tunnels are used among others in a suction buildings for cooling salad, purslane or the like quickly and thereby keeping it fresh longer and are known from "Koeltechniek", Vol. 62, October 1969, The Hague, Holland, pages 211—215.

The product generally packed in cases, crates or boxes is positioned in the tunnel on pallets or the like. Then, in the horizontal cylindrical tunnel a number of pallets stands on a conveying system behind each other and in juxtaposition having stacks of cases or the like thereon. By the type of said packing the entire load of the tunnel has the shape of a rectangular parallelepiped. It is clear that said arrangement does not use the cylindrical space optimally.

Thus, spaces remain between the side walls of the load and the tunnel wall, which in known way, may be used profitably for arranging the condensing bodies.

The parallel pipes of the known condensing bodies extending in longitudinal direction of the tunnel are arranged in a rectangular pattern within an enclosure. Said enclosure is open at its upper side and to its lower side a vacuum pump is connected. When said pump is put in operation after loading the tunnel and closing the doors, it sucks medium, in particular air and water vapour away downwards over the horizontal pipes, through which the coolant is fed from an external cooling installation. In diminishing the pressure of the medium more moisture of the product will evaporate and heat of evaporation is withdrawn from the product. After some time the vegetable is cooled sufficiently for removing from the tunnel and transferring to the cooled storage, truck or the like.

Water withdrawn from the product by evaporation condenses on the cooling pipes and drips downwards. By condensing of water on the pipes the flow of medium decreases in downwards direction. Thereby, the velocity of the air decreases also in downwards direction by which the efficiency of the heat transfer of the known condensing bodies is rather bad.

The invention has the object to improve said efficiency by which it can be cooled more quickly in a tunnel having a certain diameter.

According to the invention, this is achieved because within the enclosure a guiding partition is arranged over the entire length of the enclosure and parallel to the pipes, dividing the space within the enclosure occupied by the pipes into an upstream and a downstream compartment in each of which the horizontal cross-section decreases in the flow direction of the medium to be sucked, in which the vacuum pump or pumps is or are connected to the upper end of the downstream compartment. In this way, in each compartment the velocity at which the medium flows over the pipes remains substantially equal in each horizontal cross-section of the condensing body. In fact, in each compartment at the inlet side for the medium flowing over the pipes, more pipes are arranged next to each other than at the outlet side.

In this way in maintaining the rectangular pipe pattern with constant pitch a higher capacity is obtained. Because the connection for the vacuum pump or pumps is now at the upper side of the second compartment less or no liquid comes into the pump. The liquid accumulates at the under side of the condensing body into a receptacle. By making said receptacle as an integral part of the enclosure of the condensing body according to the invention, the condensed water is prevented from contacting the relatively hot tunnel wall. If this would be the case as in known constructions, evaporation occurs at the wall resulting in loss of capacity.

It is remarked that from US—A—1,594,169 a surface condensor for steam is known, whereby air or the like is removed from the steam.

The passage for the steam perpendicular to the pipes is also divided into two compartments, in each of which the horizontal cross-section decreases in the flow direction of the steam. However, the partition between both compartments is not parallel to the pipes, so that each pipe is cooled unequally. Moreover, this apparatus has quite another purpose.

The invention will be explained with reference to the drawing, in which:

Fig. 1 is a cross-section through the vacuum cooling tunnel, both of the condensing bodies and the load, and

Fig. 2 is an enlarged cross-section over the right hand condensing body.

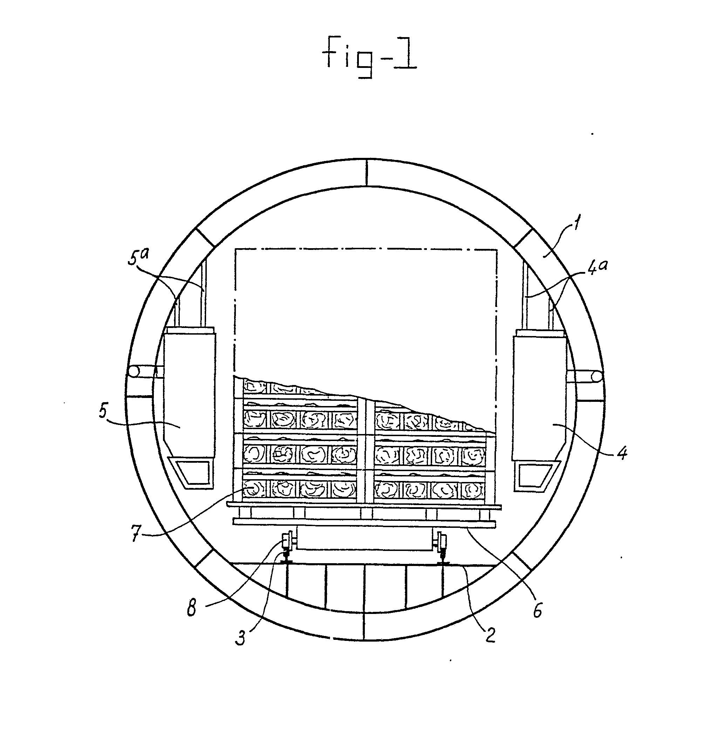

The cylindrical wall of the tunnel is indicated by 1, the floor by 2, rails by 3, condensing bodies by 4 and 5, pallets by 6 and cases by 7. The pallets 6 can be moved over rails 3 through wheels 8. In known way, the tunnel is closed at both ends by not shown head walls of which at least one is implemented as access door. After opening the door the tunnel is filled with pallets 6 having cases 7 on it. The load is of rectangular cross-section as indicated by dot and dash lines in Fig. 1.

Between the vertical walls of the load and the inner wall of the tunnel the condensing bodies 4 and 5 are arranged and suspended from the tunnel wall 1 through suspension rods 4a and 5a.

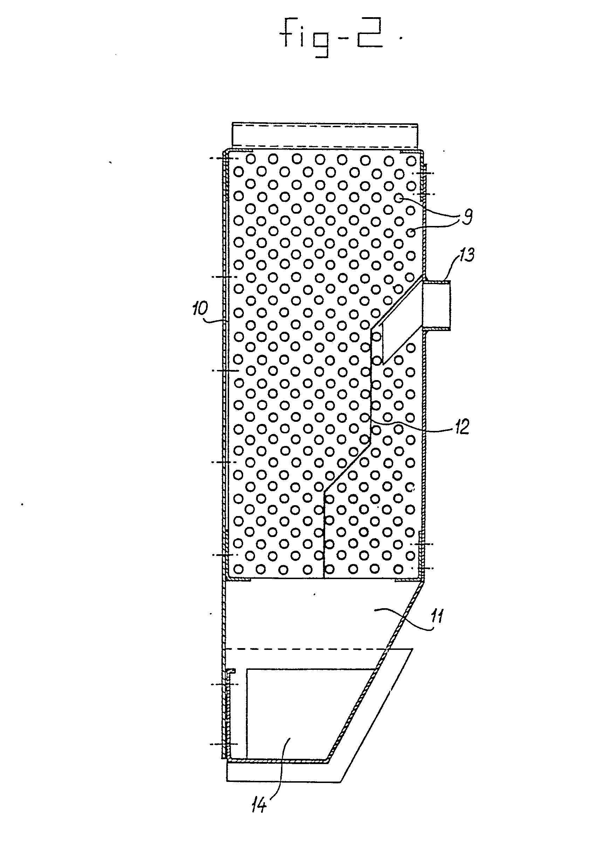

Now it is referred to Fig. 2 in which the condensing body 4 is shown in more detail.

The condensing body 4 comprises pipes 9 extending in longitudinal direction of the tunnel and arranged in rectangular pattern having an equal pitch within an enclosure 10.

The pipes 9 are interconnected and/or subdivided on different circuits and connected to supply and discharge ducts not shown. Through the pipes 9 the cold means is fed originating from an external conventional cooling apparatus.

The enclosure 10 consists of two vertical walls and a trapezium shaped chamber 11.

Within the enclosure 10 a guiding partition 12 is arranged extending over the entire length of the condensing body 4 and having a stepped appearance. Thereby in fact the enclosure 10 is subdivided in two compartments. To the upper side of the smaller compartment the suction duct 13 of a not shown vacuum pump is connected.

The upper side of the enclosure 10 is open.

Both of the compartments communicate with each other through the trapezium-shaped chamber 11.

In at least one head side of the chamber 11 a discharge 14 for water is provided. Upon opening the door of the tunnel said water flows away to the outside.

By the guiding partition 12 the horizontal section of the larger compartment becomes smaller in downwards direction, by which the velocity of the medium remains substantially constant in spite of the fact that by condensation of the evaporated water from the product onto the pipes 9 the density of the air diminishes in downwards direction.

This means already an extreme improvement of the efficiency of the condensing body, however, also a lower capacity because fewer pipes are provided.

Now, said diminished capacity is compensated according to the invention by feeding the medium behind the guiding partition 12 upwards again to the suction duct 13 of the vacuum pump.

Thus, the pipes 9 are arranged in a rectangular pattern as in the known condensing body, but the space is subdivided in two compartments by the guiding partition 12. In each compartment the horizontal section decreases in the flow direction of the medium. Between both compartments the trapezium-shaped chamber 11 is located, in which water flowing from pipes 9 collects, which is discharged through the passage 14 simultaneously with opening of the tunnel door.

The chamber 11 serves an efficient separation of gas and condensate by which as few as possible condensate goes to the vacuum pump.

Another advantage is that by receiving the condensate in the chamber 11 said condensate cannot contact the wall 1 of the tunnel. Thereby evaporation of the condensate and thereby loss of capacity is prevented.

The left hand condensing body 5 is identical to the condensing body 4 by represents a mirror image thereof.

Self evidently, the guiding partition 12 may also be a flat partition arranged slantingly.

The cooling tunnel operates as follows.

The door is opened, the load is positioned in the tunnel as quick as possible, the door is closed and the vacuum pump or pumps is or are put in operation. The water of the product evaporates and condensates onto the pipes 9.

After a vacuum is attained corresponding to the pressure of the water vapour relating to the desired product temperature, the vacuum is removed by admitting air, the door is opened and the load is transferred to a cooled space and stored therein. In this way load by load is treated.

The vacuum cooling tunnel according to the invention cools much quicker than the known tunnels so that the cooling capacity is extremely high.

While it is spoken of a vacuum cooling tunnel it is also possible to cool therewith below freezing point in which case it could be spoken of a vacuum freezing tunnel.

**Claims**

1. Vacuum cooling tunnel, in particular for cooling water containing products, such as for example salad, comprising a horizontal cylindrical housing (1) having an access door at at least one end for supplying or removing loads of products (7) on pallets (6) or the like, whereby in opposite horizontally spaced segments of the cylindrical housing (1) condensor bodies (4, 5) are arranged each consisting of parallel pipes (9) extending in the longitudinal direction of the housing (11) through which a coolant may be passed, which pipes (9) are arranged in a rectangular pattern within an enclosure (10) with at least one vertical wall, the upper side of which enclosure (10) communicates with the space in the tunnel between the opposite vertical walls and to which at least one vacuum pump is connected for sucking off the medium present in said space after said medium has passed the condensor body (4, 5) in a direction perpendicular to its pipes (9), characterized in that within the enclosure (10) a guiding partition (12) is arranged over the entire length of the enclosure (10), and parallel to the pipes (9), dividing the space within the enclosure (10) occupied by the pipes (9) into an upstream and a downstream compartment in each of which the horizontal cross-section decreases in the flow direction of the medium to be sucked, in which the vacuum pump or pumps is or are connected to the upper end (13) of the downstream compartment.

2. Vacuum cooling tunnel according to claim 1, characterized in that within the enclosure (10) of each condensing body (4, 5) beneath the space occupied by the pipes (9) and the guiding partition (12) a chamber (11) is formed extending over the entire length of the tunnel, in which the medium to be sucked varies its direction and condensed liquid can be collected, in which at at least one end of the chamber a discharge (14) for the liquid is provided.

3. Vacuum cooling tunnel according to claim 2, characterized in that the chamber forms an integral part of the enclosure (16) of the condensing body (4, 5) free from the tunnel wall (1).

## Patentansprüche

1. Vakuumkühlanlage, insbesondere zum Kühlen von Wasser enthaltenden Produkten, wie Salat, die ein horizontales zylindrisches Gehäuse (1) aufweist, das eine Zugangstür wenigstens an einem Ende zur Aufgabe und zur Entnahme von Ladungen von Erzeugnissen (7) auf Paletten (6) oder dergleichen hat, wobei in gegenüberliegenden und horizontal im Abstand liegenden Segmenten des zylindrischen Gehäuses (1) Kondensorapparate (4, 5) angeordnete sind, die jeweils aus parallelen Rohren (9) bestehen, die sich in Längsrichtung des Gehäuses (11) erstrecken und durch die ein Kühlmittel gehen kann, wobei die Rohre (9) in einem rechteckigen Muster in einer Verkleidung (10) mit wenigstens einer vertikalen Wand angeordnet sind, die obere Seite der Verkleidung (10) mit dem Raum in der Anlage zwischen den gegenüberliegenden vertikalen Wänden in Verbindung steht und an der wenigstens eine Vakuumpumpe angeschlossen ist, um das in dem Raum vorhandene Medium abzusaugen, nachdem das Medium den Kondensorapparat (4, 5) in einer Richtung senkrecht zu den Rohren (9) passiert hat, dadurch gekennzeichnet, daß in der Verkleidung (10) eine Führungstrennwand (12) über die gesamte Länge der Verkleidung (10) und parallel zu den Rohren (9) angeordnet ist, die den Raum in der Verkleidung (10), der von den Rohren (9) eingenommen wird, in eine stromaufwärtige und eine stromabwärtige Abteilung unterteilt, in denen jeweils der horizontale Querschnitt in Strömungsrichtung des anzusaugenden Mediums abnimmt, und daß die Vakuumpumpe oder die Pumpen mit dem oberen Ende (13) der stromabwärtigen Unterteilung verbunden ist oder sind.

2. Vakuumkühlanlage nach Anspruch 1, dadurch gekennzeichnet, daß in der Verkleidung (10) jedes Kondensorapparates (4, 5) unterhalb des Raums, der von den Rohren (9) und der Führungstrennwand (12) eingenommen wird, eine Kammer (11) gebildet wird, die sich über die gesamte Länge der Anlage erstreckt, in der das anzusaugende Medium seine Richtung ändert und die kondensierte Flüssigkeit gesammelt werden kann, und daß an wenigstens einem Ende der Kammer ein Auslaß (14) für die Flüssigkeit vorgesehen ist.

3. Vakuumkühlanlage nach Anspruch 2, dadurch gekennzeichnet, daß die Kammer einen integralen Teil der Verkleidung (16) des Kondensorapparates (4, 5) frei von der Anlagenwand (1) bildet.

## Revendications

1. Tunnel de refroidissement à vide, en particulier pour refroidir des produits contenant de l'eau, tels par exemple que de la salade, comprenant une enceinte cylindrique horizontale (1) comportant une porte d'accès à une extrémité au moins pour introduire ou pour extraire des chargements de produits (7) supportés par des palettes (6) ou supports analogues, de façon que dans des régions opposées et horizontalement espacées de l'enceinte cylindrique des corps de condenseurs (4, 5) soient disposés, corps dont chacun est constitué par des tubes parallèles (9) s'étendant dans la direction longitudinale (11), au travers desquels un réfrigérant peut être amené à circuler, ces tubes (9) étant disposés suivant une configuration rectangulaire à l'intérieur d'une enveloppe (10) qui comporte au moins une paroi verticale, enveloppe (10) dont le côté supérieur communique avec le volume compris dans le tunnel entre les parois verticales opposées, auquel une pompe à vide au moins est reliée pour aspirer le fluide se trouvant dans ledit volume, après que ledit fluide a passé par le corps de condenseur (4, 5) dans une direction perpendiculaire à ses tubes (9), caractérisé en ce qu'à l'intérieur de l'enveloppe (10) une cloison séparatrice de guidage (12) est disposée sur toute la longueur de l'enveloppe (10) et parallèlement aux tubes (9) en partageant l'espace, à l'intérieur de l'enveloppe (10), occupé par les tubes (9), en un compartiment amont et un compartiment aval, dans chacun desquels la section transversale horizontale diminue dans la direction de l'écoulement du fluide à aspirer, la pompe ou les pompes à vide étant reliées à l'extrémité supérieure (13) du compartiment aval.

2. Tunnel de refroidissement à vide selon la revendication 1, caractérisé en ce qu'à l'intérieur de l'enveloppe (10) de chaque corps de condensation (4, 5), sous l'espace occupé par les tuyaux (9) et la cloison de séparation de guidage (12), il est formé une chambre (11) s'étendant sur toute la longueur du tunnel, dans laquelle le fluide à aspirer varie de direction et du liquide condensé peut être recueilli, et dans laquelle, à au moins une extrémité de la chambre, une évacuation (14) pour le liquide est prévue.

3. Tunnel de refroidissement à vide selon la revendication 2, caractérisé en ce que la chambre forme une partie solidaire de l'enveloppe (16) du corps de condensation (4, 5), espacée de la paroi (1) du tunnel.

# fig-1

# Fig-2.